# EUROPÄISCHE PATENTANMELDUNG

(11) **EP 2 149 965 A1**
(43) Veröffentlichungstag der Anmeldung: **03.02.2010**
(21) Anmeldenummer: 08013875.3
(22) Anmeldetag: 01.08.2008
(51) Int. Cl.: H02K 1/27, H02K 1/28

(54) **Läufer einer permanenterregten Synchronmaschine mit Permanentmagneten**

(71) Anmelder: Siemens Aktiengesellschaft, 80333 München (DE)
(72) Erfinder: Budde, Thomas, Dr., 97072 Würzburg (DE); Knorre, Björn, 06386 Micheln (DE); Martin, Jürgen, 93051 Regensburg (DE)

(57) **Zusammenfassung**

Die Erfindung betrifft einen Läufer (1) einer permanenterregten Synchronmaschine mit Permanentmagneten (2), wobei der Läufer (1) auf seiner Mantelfläche von einer Stahlbandage (6) umgeben ist, die die Fliehkraft bei hohen Drehzahlen aufnimmt.

## Beschreibung

Die Erfindung betrifft einen Läufer einer permanenterregten Synchronmaschine durch Permanentmagneten.

Bei dynamoelektrischen Maschinen werden die Läufer aus Gründen des vereinfachten Aufbaus und der vereinfachten Herstellung im Allgemeinen immer mehr mit Permanentmagneten ausgestattet. Dabei sind die Permanentmagnete an dem Läufer zu fixieren, die bei hohen Drehzahlen bzw. Umfangsgeschwindigkeiten des Läufers betriebsfest fixiert werden müssen, um ein Ablösen der Permanentmagnete zu verhindern.

Dabei sind grundsätzlich Bandagen oder Hülsen vorgesehen.

Als Bandage kommen bisher unterschiedliche Materialien, wie z.B. Aramidgewebe oder Glasfasergewebe zum Einsatz. Bei schnell drehenden Motoren von bis zu 50 000 U/min bieten jedoch diese Materialien keine ausreichende Festigkeit, so dass auf betriebsfeste Bandagen, z.B. CFK-Werkstoffe oder Faserverbundhülsen, ebenfalls aus CFK zurückgegriffen werden muss.

Kohlenstofffaserverstärkter Kunststoff (CFK - C für Carbon) bezeichnet einen Faser-Kunststoff-Verbundstoff, bei dem in eine Matrix Kohlenstofffasern, in einer oder mehreren Lagen, als Verstärkung eingebettet sind.

Bei Verwendung dieser Materialien im Sinne einer Bandage oder einer Hülse besteht jedoch das Problem, dass bei einer Beschädigung der Bandage oder der Hülse, beispielsweise während des Montageprozesses diese ihre Festigkeit erheblich einbüßt und damit die gewünschte Fixierung der Permanentmagnete nicht mehr gewährleistet ist.

Damit ist der erforderliche Fertigungs- und Montageaufwand bei derartigen mit CFK-Werkstoff versehenen Bandagen und Hülsen aufgrund der äußersten Sorgfalt im Umgang mit diesen Materialien verhältnismäßig aufwändig.

Nachteilig ist ebenfalls, dass bei Einsatz einer Hülse mit der Funktion einer Fixierung der Permanentmagnete äußerst hohe Anforderungen an die Fertigungsgenauigkeit zu stellen sind.

Ausgehend davon liegt der Erfindung die Aufgabe zugrunde, eine Fixierung von Permanentmagneten auf einem Läufer insbesondere einer permanenterregten Synchronmaschine zu schaffen, die auch bei hohen Drehzahlen (bis zu 50 000 U/min) ausreichende Festigkeit im Betreib der dynamoelektrischen Maschine und Unempfindlichkeit während der Montage aufweist.

Die Lösung der gestellten Aufgabe gelingt durch einen Läufer einer permanenterregten Synchronmaschine mit Permanentmagneten, wobei der Läufer auf seiner Mantelfläche von einer Stahlbandage umgeben ist.

Durch Einsatz einer Stahlbandage wird nunmehr eine Beschädigung am Außendurchmesser des Läufers nicht automatisch mit einer signifikanten Schwächung der Hülse wie bei den CFK-Werkstoffen einhergehen.

Des Weiteren hat die Stahlbandage den Vorteil, dass sie im Gegensatz zu einer Hülse für jedweden Außendurchmesser oder axiale Länge einsetzbar ist und speziell auf die Bedürfnisse angepasst werden kann. Beispielsweise erfolgt u.a. durch geeignete Wahl des Materials (spezielle Stahllegierungen) und durch vorgegebenen Zug des Stahlbandes während der Montage eine Anpassung auf die zu erwartenden Betriebsparameter der dynamoelektrischen Maschine.

Die erfindungsgemäße Stahlbandage dient nicht nur der Fixierung der Permanentmagnete, die auf der Oberfläche des Läufers also auf der Mantelfläche des zylindrischen Läufers angeordnet sind, sondern dient auch zur Fixierung des Gesamtpaketes, wenn die Permanentmagnete vergraben, d.h. in axialen Ausnehmungen des Läufers eingesetzt worden sein. Diese Ausnehmungen weisen eine geschlossene Kontur auf. Damit werden beispielweise Streuschlitze zwischen diesen Ausnehmungen und dem Luftspalt mechanisch entlastet.

Eine exakte Positionierung der Stahlbandage an den Stirnseiten des Läufers erfolgt über Schweiß- oder Lötverbindungen zwischen den Enden des Stahlbandes und den Endscheiben.

Vorteilhafterweise sind dabei zusätzlich oder stattdessen in den Endscheiben Mittel vorhanden, um das Stahlband einzuklemmen um während der Wicklung einen Zug auf das Stahlband ausüben zu können.

Das Stahlband dient in erster Linie dazu, die Permanentmagnete auf dem Läufer und/oder den Läufer als Gesamtpaket zusammen zuhalten, insbesondere gegenüber den außerordentlichen Fliehkräften, die bei 50 000 U/min auftreten. Dies geschieht dadurch, dass entweder das Stahlband der einen Lage mit dem Stahlband der vorigen Lage überlappt, oder dass die Stahlbänder Stoß an Stoß aufgewickelt sind, so dass die eine Lage mit der anderen Lage ohne Überlappung und ohne einer Lücke angeordnet ist. In einigen Anwendungsfällen genügt es auch, wenn das Stahlband auf Lücke zur vorigen Wicklung aufgesetzt ist, da auch dort die Fliehkräfte in ausreichender Art und Weise aufgenommen werden.

Vorteilhafterweise wird das Stahlband mit einer vorgebbaren Vorspannung, also einem gewissen Zug um den Läufer gewickelt und letztendlich durch Schweißungen an den Endscheiben fixiert.

Vorteilhafterweise ist das Stahlband ca. 0,1 mm dick, was insbesondere dann zu einer lediglich geringen Reduzierung des Luftspaltes der dynamoelektrischen Maschine führt.

Die Erfindung sowie weitere vorteilhafte Ausgestaltungen der Erfindung sind den schematisch dargestellten Ausführungsbeispielen zu entnehmen. Darin zeigen:
- FIG 1: Läufer ohne Bandage,
- FIG 2 bis 5: Läufer in unterschiedlichen Phasen der Bandagierung
- FIG 6 bis 8: Befestigungsmöglichkeiten der Bandage.

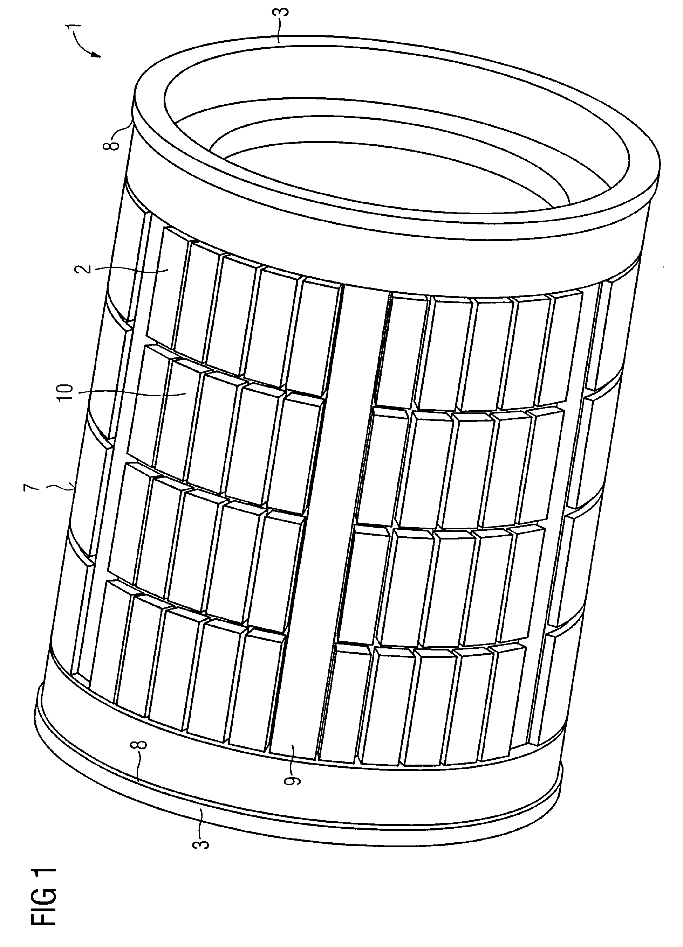

FIG 1 zeigt einen Läufer 1 einer nicht näher dargestellten permanenterregten Synchronmaschine, der an seiner äußeren Mantelfläche 7, die im wesentlichen zylinderförmig ausgestaltet ist Permanentmagnete 2 aufweist. Die Permanentmagnete 2 sind in dieser Ausführungsform sowohl in Umfangsrichtung als auch in axialer Richtung ohne Schrägung oder Staffelung an der Mantelfläche 7 des Läufers 1 angeordnet. Zwischen den magnetischen Polen sind Pollücken 9, die die jeweiligen magnetischen Pole 10 voneinander trennt. Ein magnetischer Pol 10 weist in diesem Ausführungsbeispiel in Umfangsrichtung fünf Permanentmagnete 2 auf und in axialer Richtung vier Permanentmagnete 2. Damit weist in diesem Fall ein magnetischer Pol 10 vierzig Permanentmagnete 2 auf.

Die im Folgenden beschriebene Erfindung lässt sich ebenso auf Permanentmagnete 2 eines Läufers 1 mit Staffelung oder Schrägung der magnetischen Pole anwenden. Des Weiteren ist die Erfindung ebenso auf blättchenförmige oder schalenförmige Permanente 2 anzuwenden. Eine Schrägung oder Staffelung wird geschaffen, indem die Permanentmagnete 2 eines magnetischen Pols in axialer Richtung betrachtet schräg bzw. gestaffelt verlaufen oder indem eine schräge oder gestaffelte Aufmagnetisierung von ansonsten axial hintereinander angeordneten Permanentmagneten 2 erfolgt.

An den Stirnseiten des Läufers 1 befinden sich Endscheiben 3, die unter anderem dazu dienen, das radial unterhalb der Permanentmagnete 2 befindliche Blechpaket des Läufers 1 zu fixieren. Dies gelingt beispielsweise durch Schraubbolzen oder Verklebungen.

Diese Endscheiben 3 weisen insbesondere eine Abstufung 8 auf, die im Wesentlichen der Dicke des Stahlbandes 4 entspricht, um einen gleichmäßigen Luftspalt der dynamoelektrischen Maschine über die gesamte axiale Länge des Läufers 1 zu erhalten.

Um nun die Permanentmagnete 2, die auf dem Läufer 1 angeordnet sind auch für höhere Drehzahlen der permanenterregten Synchronmaschine (bis zu 50 000 U/min) zu fixieren, ist erfindungsgemäß ein Stahlband 4 mit einer Dicke von vorzugsweise von 0,1 mm vorgesehen, das dabei insbesondere eine Breite von ca. 2 cm aufweist. Diese Dimensionen haben sich besonders vorteilhaft im Handling mit einem dargestellten Läufern 1 erwiesen.

Selbstverständlich sind diese Dimensionierungen an die Achshöhen, erwarteten Fliehkraftbeanspruchungen und axialen Längen der Läufer 1 auszurichten.

Die Vorspannkraft des Stahlbandes 4 beim Bewickeln des Läufers 1 muss zumindest so gewählt werden, dass bei der maximal zulässigen Drehzahl des Läufers 1 die Fliehkraft der Stahlbandage 6 und der Permanentmagneten 2 sowie die radial wirkende Magnetkraft kompensiert wird. Dabei muss eine ausreichend hohe Anpresskraft der Permanentmagnete 2 auf dem Blechpaket des Läufers 1 erhalten bleiben, damit die tangential wirkende Magnetkraft für die Drehmomentbildung auf das Blechpaket übertragen werden kann.

Die Dicke des Stahlbandes 4 ist so zu wählen, dass die erforderliche Vorspannkraft der Stahlbandage bei allen Betriebsbedingungen der dynamoelektrischen Maschine auf jeden Fall nicht den werkstoffspezifischen Wert der Zugspannung für die 0,2 Grenze Überschreitet. Die 0,2-Grenze bezeichnet in der Werkstoffwissenschaft den Bereich, wo die Festigkeit vom elastischen in den plastischen Bereich übergeht.

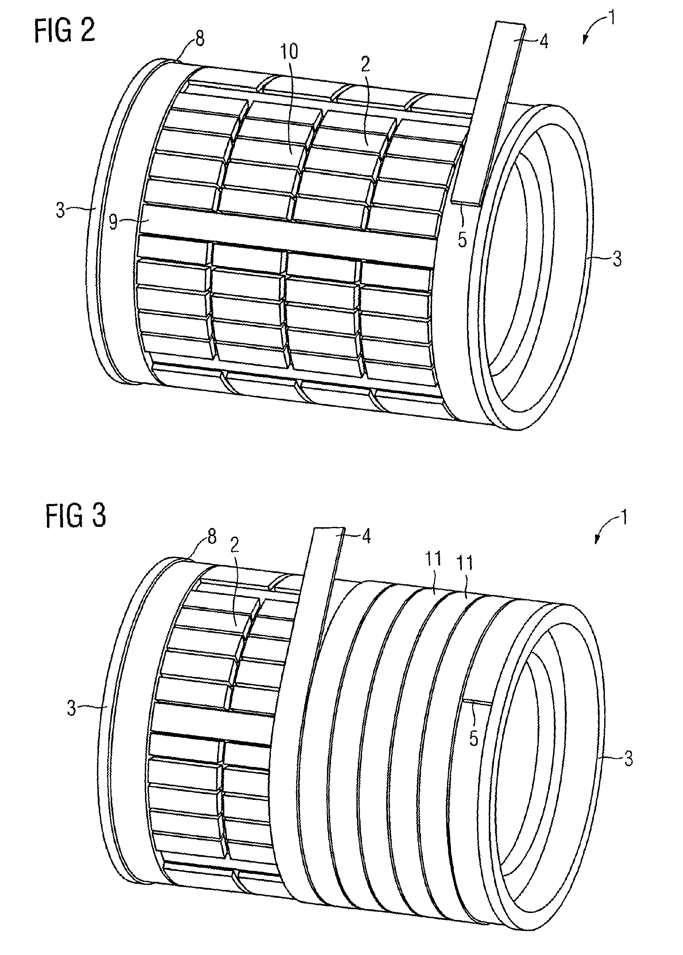

Um einen Anfangspunkt des Stahlbandes 4 am Läufer 1 insbesondere an einer Endscheibe 3 gemäß FIG 2 zu erhalten, wird das Stahlband 4 an einem Fixierpunkt 5, der als Schlitz 18 und/oder zusätzlich durch eine Schweißverbindung gebildet werden kann, an der Endscheibe 3 fixiert ist. Danach wird das Stahlband 4 mit einer vorgebbaren Ganghöhe um den Läufer 1 unter vorbestimmtem Zug gewickelt.

Der Wickelvorgang selbst wird ausgeführt durch Drehen des Läufers 1 bei gleichzeitig vorgebbarem axialem Vorschub oder durch eine geeignete Vorrichtung, die sich um den Läufer 1 bewegt und einen axialen Vorschub aufweist.

Wie FIG 3 zeigt, entspricht dabei die Ganghöhe, also der axiale Abstand zweier unmittelbar aufeinanderfolgender Wicklungen 11 bzw. Lagen exakt der Breite des Stahlbandes 4, so dass das Stahlband 4 über die axiale Länge des Läufers 1 betrachtet, jeweils Kante an Kante stößt und nahezu keine Spalte zwischen den einzelnen Gängen vorhanden sind.

Alternativ dazu lassen sich auch kleinere Ganghöhen bzw. größere Ganghöhen realisieren, so dass entweder ein Überlappen des Stahlbandes 4 erfolgt bzw. zwischen dem einen Gang und dem anderen Gang, also zwischen zwei benachbarten Wicklungen 11 eine Lücke verbleibt.

Am Ende des Wickelvorganges, wird das Stahlband 4 erneut auf einen Fixpunkt 5 am Läufer 1 oder der anderen Endscheibe 3 geführt, wo es wiederum beispielsweise durch eine Schweißverbindung fixiert wird. Der gesamte Wickelvorgang der Stahlbandage geschieht mit einem vorgebbaren Zug des Stahlbandes 4, die in Abhängigkeit vom Außendurchmesser des Läufers 1 und/oder den zu erwartenden Drehzahlen der dynamoelektrischen Maschine erfolgt.

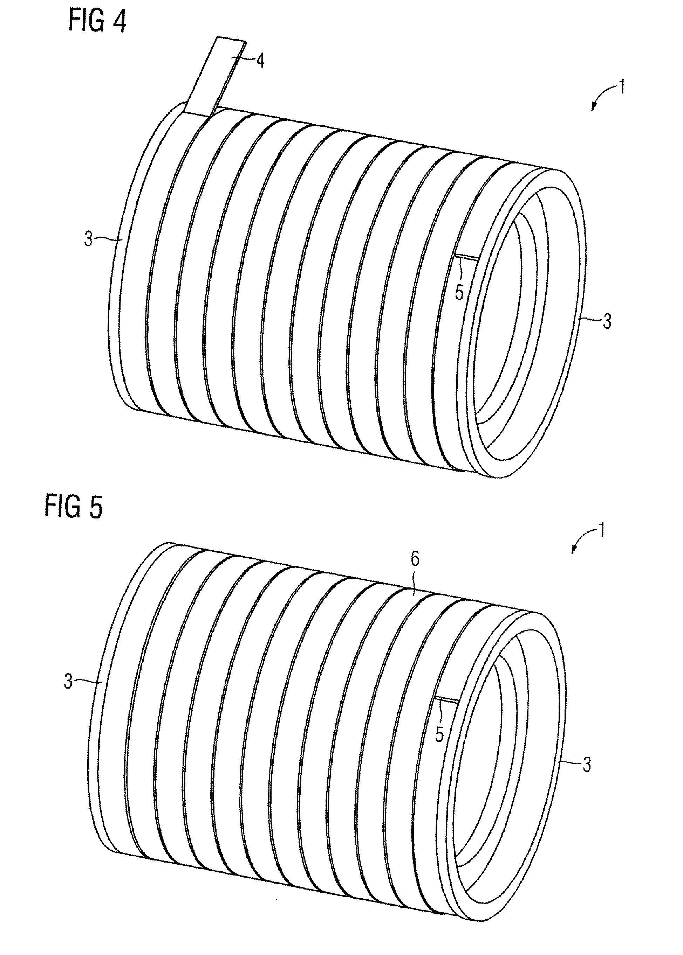

FIG 5 zeigt den nunmehr bandagierten Läufer 1, wobei sich die Stahlbandage 6 über die gesamte mit Permanentmagneten 2 versehene axiale Länge des Läufers 1 erstreckt. Durch die Stahlbandage 6, die gegenüber den bisherigen CFK-Werkstoffen wesentlich robuster ist, führt somit auch eine Beschädigung an der Außenhaut der Stahlbandage 6 nicht zu einer signifikanten Schwächung dieser Bandage. Durch diese Stahlbandage 6, die als Edelstahl oder als Stahllegierung ausgeführt werden kann, sind in einfacher Art und Weise auch unterschiedliche Läufer 1 von unterschiedlichen permanenterregten Synchronmaschinen zu versehen, die sich in Durchmesser und axialer Länge und Drehzahlen voneinander unterscheiden.

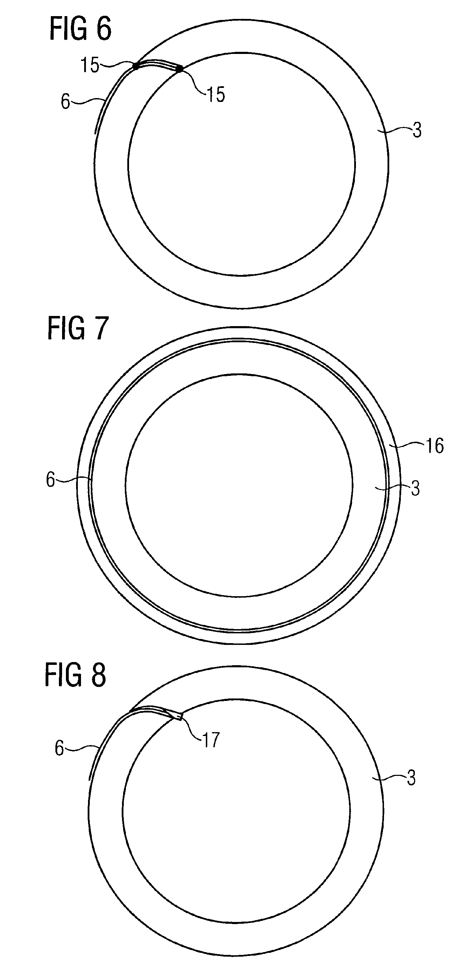

FIG 6 bis 8 zeigt mehrere Ausführungsbeispiele, wie das Stahlband 4 an den Endscheiben 3 fixiert werden kann.

Dies geschieht über Schweißpunkte 15 bzw. Lötpunkte an den Endscheiben 3 oder durch Klemmverbindungen eines Keiles 17 in einem Schlitz 18 der Endscheibe 3. Dadurch ergibt sich eine Fixierung, die sich an der axialen Stirnseite des Läufers 1 befindet.

Ebenso sind auch alternativ Klemmringe 16 bzw. Schrumpfringe an den Endscheiben 3 des Läufers 1 zur Fixierung der Stahlbandage 4 an den Endscheiben 3 vorzusehen. Dabei ist die Endscheibe 3 so zu gestalten, dass sich durch Aufziehen des Schrumpfringes der Luftspalt der dynamoelektrischen Maschine nicht verringert. Dies gelingt durch eine teilweise radiale Reduzierung eines axialen Bereichs der Endscheibe 3, die im Wesentlichen der radialen Dicke des Klemmringes 16 entspricht.

Diesen Fixierungen des Stahlbandes 4 ist gemein, dass sie im Betreib selbstverständlich auch die oben genannten Anforderungen u.a. bzgl. Fliehkraftbeanspruchung etc. erfüllen.

## Patentansprüche

1. Läufer (1) einer permanenterregten Synchronmaschine mit Permanentmagneten (2), wobei der Läufer (1) auf seiner Mantelfläche von einer Stahlbandage (6) umgeben ist.

2. Läufer (1) einer permanenterregten Synchronmaschine nach Anspruch 1, **dadurch gekennzeichnet, dass** sich die Permanentmagnete (2) auf der Oberfläche des Läufers (1) befinden und durch die Stahlbandage (6) gehalten sind, oder dass die Permanentmagnete (2) in axial verlaufenden Ausnehmungen des Läufers (1) eingesetzt sind und der Läufer (1) zusätzlich von der Stahlbandage (6) umgeben ist.

3. Läufer (1) einer permanenterregten Synchronmaschine nach Anspruch 1 oder 2, **dadurch gekennzeichnet, dass** die Enden der Stahlbandage (6) an den jeweiligen Enden der Mantelfläche (7) des Läufers (1) vorzugsweise mit den dort befindlichen Endscheiben (3) stoffschlüssig und/oder reibschlüssig verbunden sind.

4. Läufer (1) einer permanenterregten Synchronmaschine nach Anspruch 3, **dadurch gekennzeichnet, dass** die Endscheibe (3) Mittel zum Ansetzen und/oder Klemmen der Stahlbandage (6) aufweist.

5. Läufer (1) einer permanenterregten Synchronmaschine nach einem der vorhergehenden Ansprüche, **dadurch gekennzeichnet, dass** sich die Lagen der Stahlbandage (6) überlappen oder Stoß auf Stoß oder beabstandet angeordnet sind.

6. Läufer (1) einer permanenterregten Synchronmaschine nach einem der vorhergehenden Ansprüche, **dadurch gekennzeichnet, dass** die Stahlbandage (6) den Läufer (1) mit einer vorgebbaren Vorspannung umgibt.

7. Läufer (1) einer permanenterregten Synchronmaschine nach einem der vorhergehenden Ansprüche, **dadurch gekennzeichnet, dass** die Dicke der Stahlbandage (6) zwischen 0,1 mm und 1,5 mm ist.

8. Permanenterregte Synchronmaschine mit einem Läufer (1) nach einem der vorhergehenden Ansprüche, **dadurch gekennzeichnet, dass** die permanenterregte Synchronmaschine für Nenndrehzahlen von größer 50 000 U/min eingesetzt wird.
